# EUROPEAN PATENT APPLICATION

(11) **EP 4 009 124 A1**
(43) Date of publication of application: **08.06.2022**
(21) Application number: 20211261.1
(22) Date of filing: 02.12.2020
(51) Int. Cl.: G05B 19/418

(54) **VISUALIZATION OF INDUSTRIAL CONTROL OPERATION DATA VIA A CENTRAL SERVER**

(71) Applicant: CODESYS Holding GmbH, 87439 Kempten (DE)
(72) Inventor: Schaber, Markus, 87435 Kempten (DE)
(74) Representative: Kretschmann, Dennis

(57) **Abstract**

A server device for an industrial control environment is adapted to couple to a first industrial control system comprising at least a first industrial control unit via a first network, and to couple to a client device via a second network. The server device comprises a visualization unit adapted to receive first operation data pertaining to an operation of the first industrial control unit from the first industrial control system via the first network, and is further adapted to provide the first operation data to the client device via the second network for a visualization of the first operation data at the client device.

## Description

### Technical Field

The disclosure relates to a server architecture for providing industrial control operation data for visualization at a client device.

### Background

Industrial control units are ubiquitous in modern manufacturing and process control, and are regularly employed to control manufacturing equipment, chemical plants or other devices. Typically, an industrial control unit may run an industrial control program, such as a compiled industrial control program or ladder logic instructions, and may send control instructions to an actuator unit of the controlled machinery in accordance with the industrial control program via an industrial control network. The industrial control unit may also receive data from a sensor unit of the controlled machinery via the industrial control network, such as parameters relating to process variables or measurement data pertaining to the machinery, which may be processed in the industrial control unit and may serve as feedback for the industrial control program or actuator units.

The industrial control unit may comprise a user interface that allows user access to the industrial control unit to obtain industrial control operation data, for instance data pertaining to the operation of the controlled machinery, such as sensor data or internal data relating to an operational state of the controlled machinery. It may be desirable and convenient for the user to have the industrial control operation data presented in a graphical format, such as in the form of dials, bar charts or indicator lights in a graphical user interface, so to allow the user to quickly grasp the essence of the data. Optionally, the graphical user interface may also allow the user to input data, such as to request specific sensor data from the industrial control unit or to input parameters pertaining to the operation of the controlled machinery.

In many practically relevant scenarios, the (graphical) user interface may also permit the user to access the industrial control unit remotely, for enhanced user convenience. While the industrial control unit may be located within and coupled to an industrial control network, such as an intranet or fieldbus network, it is desirable that the industrial control unit can also be accessed remotely from a public network, such as the Internet. This is particularly advantageous when there are different and remote production sites that each have their local internal industrial control networks, but are coupled via a public network such as the Internet. In addition, third party contractors that may not have physical access to the production site may also wish to access the industrial control unit remotely via the Internet for maintenance and service.

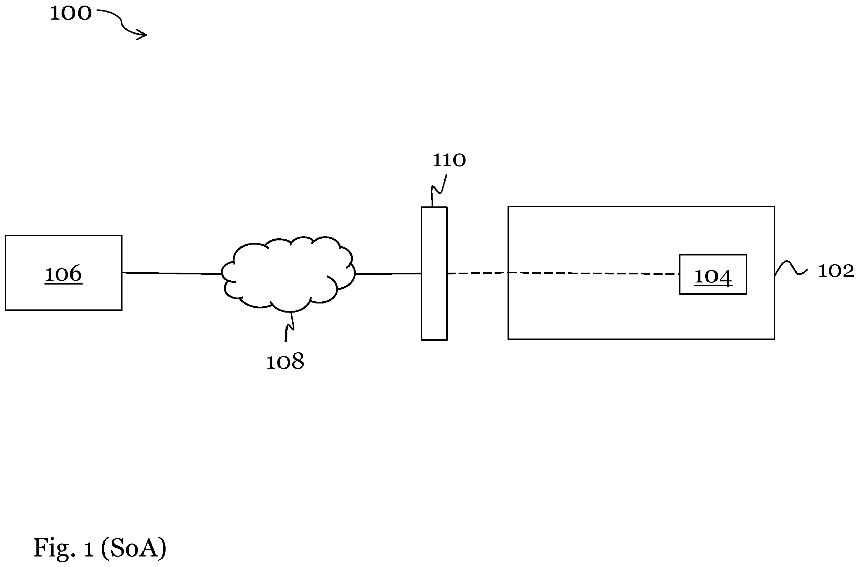

Fig. 1 illustrates an industrial control environment 100 according to the state-of-the-art, comprising an industrial control network 102 with an industrial control unit 104. The industrial control network 102, and in particular the industrial control unit 104, may be accessed remotely, such as from a web application 106 via a public network 108, such as the Internet.

While a remote access to the industrial control unit from within the public network 108 enhances the user convenience, it may present potential attack channels and hence may pose a security threat, in particular when the industrial control network 102 comprises sensitive machinery or safety-critical infrastructure.

In case the industrial control unit 104 is accessible via an IP address, a firewall 110 may be employed to protect the industrial control network 102 against unauthorised access, but this still requires the HTTP ports of the industrial control unit 104 to be publicly exposed. Additional protection may be achieved by means of certificates or security tokens, but this enhances the maintenance effort and can be detrimental to the user convenience.

Alternative techniques that are currently being used to access an industrial control unit 104 within an industrial control network 102 remotely comprise VPN or SSH tunnels, but these solutions often require trained personnel for implementation and maintenance, further require dedicated software on the client computers, and are oftentimes vulnerable against unauthorised access.

### Overview

In view of the prior art and its shortcomings, there remains a need for improved techniques for accessing an industrial control unit remotely and for providing industrial control operation data for visualization at a client device in a secure and efficient manner.

These objectives are achieved with a server device for an industrial control environment according to independent claim 1, and a method for providing visualization data according to independent method claim 8. The dependent claims relate to preferred embodiments.

In a first aspect, the disclosure relates to a server device for an industrial control environment, the server device being adapted to couple to a first industrial control system comprising at least a first industrial control unit via a first network, and to couple to a client device via a second network. The server device comprises a visualization unit adapted to receive first operation data pertaining to an operation of the first industrial control unit from the first industrial control system via the first network, and further adapted to provide the first operation data to the client device via the second network for a visualization of the first operation data at the client device.

By providing the operation data on an intervening server device, the client device may access the operation data in a convenient manner. At the same time, direct access of the client device to the first industrial control system or the first industrial control unit may no longer be required and may in fact be (partially or fully) prevented. The first industrial control system may be fully or partially shielded from the public second network, which allows protecting the industrial control system and the industrial control unit against unauthorised access.

In addition, the server device may comprise some or all of the visualization logic required for the visualization of the first operation data, which may reduce the processing load and memory requirements of the first industrial control system and/or the first industrial control unit, as well as the communication load of the first network/industrial control network.

In the context of the present disclosure, an industrial control system may be any system of hardware units and/or software units adapted to control a device or an array of devices by means of an industrial control program. The first industrial control system comprises the first industrial control unit, and may optionally comprise further industrial control units and other devices, in particular actuator units and/or sensor units.

An industrial control unit, in the sense of the present disclosure, may be any unit adapted to run an industrial control program for controlling a device or an array of devices, such as machinery or a chemical production plant.

In the context of the present disclosure, operation data may denote any data pertaining to an operation of the first industrial control unit and/or the associated device or array of devices controlled by the industrial control program. For instance, the first operation data may comprise sensor data, such as sensor data pertaining to an operation of the device or array of devices controlled by the industrial control program. The first operation data may also comprise data pertaining to an internal state of the industrial control unit.

A client device, in the context of the present disclosure, may denote any computer device adapted to access the server device via the second network and to visualize the first operation data.

In some embodiments, the visualization unit may be implemented in hardware, whereas in other embodiments the visualization unit may be implemented in software or firmware. In still further embodiments, the visualization unit may be implemented partly in hardware and partly in software/firmware.

In an embodiment, the first network may be an industrial control network.

An industrial control network, in the sense of the present disclosure, may refer to any network that comprises a plurality of industrial control units and/or input/output devices that operate in accordance with an industrial control program.

For instance, the first network may be or may comprise a fieldbus network.

In an embodiment, the second network may be different from the first network.

The second network may be a public network, in particular may be or may comprise an Internet network.

According to an embodiment, the server device is adapted to communicate with the first industrial control system via the first network by means of a first communication protocol, and to communicate with the client device via the second network by means of a second communication protocol, wherein the second communication protocol is different from the first communication protocol.

According to an embodiment, the second communication protocol is http, and optionally the first communication protocol is different from http.

According to an embodiment, the server device is adapted to communicate with the first industrial control system over a first communication channel via the first network, wherein the first communication channel is a secure communication channel, in particular a secure communication channel established between the server device and the first industrial control system or the first industrial control unit.

According to an embodiment, the first communication channel is an authenticated communication channel.

In an embodiment, the server device is adapted to couple to the first industrial control system through a firewall.

The firewall may protect the first industrial control system from unauthorised access.

According to an embodiment, the server device is adapted to establish a communication channel with the first industrial control system via the first network upon receipt of a communication request from the first industrial control system, in particular from the first industrial control unit.

In particular, the server device may be adapted to establish a communication channel with the first industrial control system via the first network only upon receipt of a communication request from the first industrial control system, in particular from the first industrial control unit.

By making the establishment of the communication channel dependent upon receipt of a communication request from the first industrial control system, the industrial control system may be limited to outgoing connections, thereby shielded the industrial control system against attacks, and the communication between the server device and the first industrial control system may be efficiently secured against unauthorised access.

According to an embodiment, the server device is adapted to receive, from the client device, a request for the first operation data, and to provide the first operation data to the client device in response to the request.

Alternatively, the server device may be adapted to push the first operation data to the client device, for instance push the first operation data to the client device when the first operation data becomes available at the server device or when the first operation data has changed.

According to an embodiment, the server device is spatially remote from the first industrial control system and/or from the client device.

According to an embodiment, the server device comprises a memory unit communicatively coupled to the visualization unit, wherein the memory unit is adapted to store template data pertaining to the visualization, and wherein the visualization unit is adapted to receive the template data from the memory unit and to combine the template data with the first operation data pertaining to the operation of the first industrial control unit.

The visualization unit may be adapted to provide the combined data to the client device via the second network for the visualization of the first operation data at the client device.

Template data, in the sense of the present disclosure, may be understood to comprise any ancillary data that is distinct from the first operation data and that may be employed in the context of the visualization. For instance, the template data may comprise data pertaining to a display mode of the first operation data, and/or may comprise image data and/or data relating to the display of dials, bar charts or indicator lights on the client device.

By providing template data at the server device, the memory and processing requirements on the industrial control system and/or the industrial control unit may be relaxed. In addition, the amount of data traffic between the server device and the first industrial control system and/or the latency may be reduced. Moreover, advantageously an update of the template data may be performed centrally at the server device, which makes the setup and maintenance of the industrial control environment more efficient and user-friendly.

According to an embodiment, the server device may be adapted to provide industrial control program files, functions and parameters centrally for a plurality of industrial control units, including the first industrial control unit of the first industrial control system. The server device may also be employed to provide update or maintenance functionalities for these industrial control units. Such a central server device is sometimes known as an automation server.

The automation server may store information on types and versions of the industrial control programs running on the first industrial control unit, and possibly further industrial control units in the industrial control system, which may allow the automation server to provide tailored template data that is specific for the particular industrial control unit.

According to an embodiment, the visualization unit is adapted to receive first indication data from the first industrial control system, in particular the first industrial control unit, and wherein the visualization unit is adapted to determine from the first indication data whether an operational state of the first industrial control system, in particular the first industrial control unit, has changed, for instance has changed in a predetermined time period or since a preceding update.

In an embodiment, the visualization unit may be adapted to receive the first operation data from the first industrial control system, in particular from the first industrial control unit, in case the visualization unit has determined a change in the operational state of the first industrial control system, in particular the first industrial control unit.

Further, the visualization unit may be adapted not to receive the operational data from the first industrial control system, in particular from the first industrial control unit, in case the visualization unit has determined no change in the operational state of the first industrial control systems, in particular the first industrial control unit.

By making the transfer of the first operation data from the first industrial control system to the server device dependent on an indication of the change in the first operation data, for instance a change in a predetermined time period or a change since the preceding update, the data traffic between the first industrial control system and the server device may be further reduced.

According to an embodiment, the visualization unit is adapted to couple to the first industrial control unit via the first network, and wherein the visualization unit is adapted to receive the first operation data from the first industrial control unit.

In an embodiment, the first industrial control system is associated with an interface unit communicatively coupled to the first industrial control unit, wherein the visualization unit is adapted to be coupled to the interface unit and to receive the first operation data from or via the interface unit.

In an embodiment, the first industrial control system comprises the interface unit.

In some embodiments, the interface unit may be implemented in hardware. In other embodiments, the interface unit may be implemented in software or firmware. In still further embodiments, the interface unit may be implemented partly in hardware and partly in software/ firmware.

The interface unit may be is spatially separated from the first industrial control unit.

As an example, the interface unit may be adapted to receive and collect operation data from a plurality of industrial control units.

According to an embodiment, the first industrial control system further comprises a second industrial control unit, wherein the visualization unit is adapted to receive second operation data pertaining to an operation of the second industrial control unit from the first industrial control system via the first network, and further adapted to provide the second operation data to the client device via the second network for a visualization of the second operation data at the client device.

Hence, advantageously, the server device may serve as a central server that collects the operation data from a plurality of industrial control units of the industrial control system, and may centrally provide the operation data for the visualization at the client device. An update of the visualization software and/or parameters relating to the visualization may hence be limited to the server device, and may not need to be performed on each of the plurality of industrial control units separately.

In a similar vein and with corresponding advantages, the server device may also collect operation data from any number of industrial control systems, wherein each industrial control system may comprise a plurality of industrial control units.

According to an embodiment, the server device is hence adapted to further couple to a second industrial control system via a third network, the second industrial control system comprising at least a third industrial control unit, wherein the visualization unit is adapted to receive third operation data pertaining to an operation of the third industrial control unit from the second industrial control system via the third network, and is further adapted to provide the third operation data to the client device via the second network for a visualization of the third operation data at the client device.

In some embodiments, the third network is identical to the first network, or coincides with the first network. In other embodiments, the third network is different from the first network.

For instance, the third network may be or may comprise a fieldbus network.

In an embodiment, the third network may be different from the second network.

As described above, in some embodiments the operation data maybe provided to the server device via a (common) interface unit.

In particular, the first industrial control system may further comprise a second industrial control unit, and the first industrial control system may be associated with an interface unit communicatively coupled to the first industrial control unit and the second industrial control unit, wherein the visualization unit is adapted to be coupled to the interface unit and to receive the first operation data and second operation data pertaining to an operation of the second industrial control unit from or via the interface unit, wherein the visualization unit is further adapted to provide the second operation data to the client device via the second network for a visualization of the second operation data at the client device.

According to an embodiment, the server device is adapted to further couple to a second industrial control system via a third network, the second industrial control system comprising at least a third industrial control unit, wherein the first industrial control system and the third industrial control system are associated with a common interface unit, wherein the visualization unit is adapted to be coupled to the interface unit and to receive the first operation data and third operation data pertaining to an operation of the third industrial control unit from or via the interface unit, wherein the visualization unit is further adapted to provide the third operation data to the client device via the second network for a visualization of the third operation data at the client device.

According to an embodiment, the server device is adapted to receive the first operation data via a network tunnel established between the server device and the first industrial control system.

A network tunnel between the server device and the first industrial control system may provide a secure and authenticated communication channel for the first operation data, and potentially other data exchanged between the first industrial control system and the server device.

In some embodiments, the first industrial control system may comprise an edge device, and the network tunnel may be established between the server device and the edge device.

In particular, the server device may be adapted to establish the network tunnel between the server device and the first industrial control system, in particular between the server device and the edge device.

In the context of the present disclosure, and edge device may be a network device providing an interface functionality between two different networks, or two different areas of a network.

In some embodiments, the edge device may be an edge gateway or may comprise an edge gateway.

In further embodiments having a plurality of industrial control systems, some or all of the industrial control systems may likewise comprise an edge device, in particular an edge gateway, with the same or similar functionality as described above.

A plurality of network tunnels may be established between the server device and the plurality of industrial control systems, in particular the plurality of edge devices or edge gateways.

In a second aspect, the disclosure relates to an industrial control environment comprising a server device with some or all of the features described above, and at least the first industrial control system.

In particular, in the second aspect the disclosure relates to an industrial control environment comprising a server device and a first industrial control system comprising at least a first industrial control unit, wherein the server device is coupled to the first industrial control system via a first network, and is adapted to couple to a client device via a second network. The server device comprises a visualization unit adapted to receive first operation data pertaining to an operation of the first industrial control unit from the first industrial control system via the first network, and is further adapted to provide the first operation data to the client device via the second network for a visualization of the first operation data at the client device.

According to an embodiment, the first industrial control system, in particular the first industrial control unit, is adapted to send a request for establishing a communication channel with the server device to the server device via the first network.

The communication channel may be a secure communication channel, in particular an authenticated communication channel.

According to an embodiment, the first industrial control system, in particular the first industrial control unit, is adapted to provide first indication data to the visualization unit via the first network, the first indication data indicating whether an operational state of the first industrial control system, in particular the first industrial control unit, has changed, and wherein the visualization unit is adapted to receive the first indication data from the first industrial control system, in particular the first industrial control unit, and to determine from the first indication data a change in the operational state of the first industrial control system, in particular the first industrial control unit.

The visualization unit may be adapted to receive the first operational data from the first industrial control system, in particular the first industrial control unit, in case the visualization unit has determined the change in the operational state of the first industrial control system, in particular the first industrial control unit.

According to an embodiment, the industrial control environment further comprises an interface unit communicatively coupled to the first industrial control unit, wherein the visualization unit is coupled to the interface unit and is adapted to receive the first operation data from or via the interface unit.

According to an embodiment, the first industrial control system further comprises a second industrial control unit, wherein the visualization unit is adapted to receive second operation data pertaining to an operation of the second industrial control unit from the first industrial control system via the first network, and further adapted to provide the second operation data to the client device via the second network for a visualization of the second operation data at the client device.

According to an embodiment, the industrial control environment further comprises an interface unit coupled to the first industrial control unit and to the second industrial control unit, wherein the visualization unit is coupled to the interface unit and adapted to receive the first operation data and the second operation data from or via the interface unit.

According to an embodiment, the industrial control environment further comprises a second industrial control system coupled to the server device via a third network, the second industrial control system comprising at least a third industrial control unit, wherein the visualization unit is adapted to receive third operation data pertaining to an operation of the third industrial control unit from the second industrial control system via the third network, and further adapted to provide the third operation data to the client device via the second network for a visualization of the third operation data at the client device.

According to an embodiment, the industrial control environment further comprises an interface unit coupled to the first industrial control system and the second industrial control system, wherein the visualization unit is coupled to the interface unit and adapted to receive the first operation data and the third operation data from or via the interface unit.

In an embodiment, the industrial control environment further comprises the client device, wherein the client device is coupled to the server device via the second network.

The client device may be adapted to request the first operation data and/or the second operation data and/or the third operation data from the server device.

According to an embodiment, the client device is adapted to receive the first operation data and/or the second operation data and/or the third operation data from the server device.

In a third aspect, the disclosure relates to a method for providing visualization data in an industrial control environment, the industrial control environment comprising a server device, a client device and a first industrial control system with at least a first industrial control unit, wherein the server device is adapted to couple to the first industrial control system via a first network and to couple to the client device via a second network.

The method comprises receiving, at the server device, first operation data pertaining to an operation of the first industrial control unit from the first industrial control system via the first network, and providing the first operation data from the server device to the client device via the second network for a visualization of the first operation data at the client device.

According to an embodiment, the method further comprises receiving, at the server device, a communication request from the first industrial control system, in particular from the first industrial control unit, and establishing a communication channel with the first industrial control system, in particular with the first industrial control unit, via the first network in response to the communication request.

According to an embodiment, the method further comprises sending, at the first industrial control system, in particular the first industrial control unit, the communication request to the server device via the first network.

According to an embodiment, the method further comprises storing, at the server device, template data pertaining to the visualization; and combining, at the server device, the template data with the first operation data pertaining to the operation of the first industrial control unit; and providing the combined to data to the client device via the second network for the visualization of the first operation data at the client device.

According to an embodiment, the method further comprises receiving first indication data from the first industrial control system, in particular from the first industrial control unit; determining from the first indication data whether a change has occurred in an operational state of the first industrial control system, in particular the first industrial control unit; and receiving the first operation data from the first industrial control system, in particular the first industrial control unit, in case of the change in the operational state of the first industrial control system, in particular the first industrial control unit.

According to an embodiment, the method further comprises providing first indication data from the first industrial control system, in particular from the first industrial control unit, to the server device via the first network, the first indication data indicating whether an operational state of the first industrial control system, in particular the first industrial control unit has changed
In an embodiment, the first industrial control system further comprises a second industrial control unit, and the method comprises receiving, at the server device, second operation data pertaining to an operation of the second industrial control unit from the first industrial control system via the first network; and providing the second operation data to the client device via the second network for a visualization of the second operation data at the client device.

According to an embodiment, the first industrial control system further comprises a second industrial control unit, and the first industrial control system is associated with an interface unit coupled to the first industrial control unit and to the second industrial control unit. The method may further comprise receiving, at the server device, the first operation data and second operation data pertaining to an operation of the second industrial control unit from the interface unit; and providing the second operation data to the client device via the second network for a visualization of the second operation data at the client device.

According to an embodiment, the server device is adapted to further couple to a second industrial control system via a third network, the second industrial control system comprising at least a third industrial control unit. The method may comprise receiving, at the server device, third operation data pertaining to an operation of the third industrial control unit from the second industrial control system via the third network; and providing the third operation data to the client device via the second network for a visualization of the third operation data at the client device.

According to an embodiment, the server device is adapted to further couple to a second industrial control system via a third network, the second industrial control system comprising at least a third industrial control unit, wherein the first industrial control system and the second industrial control system are associated with a common interface unit. The method may further comprise receiving, at the server device, the first operation data and third operation data pertaining to an operation of the third industrial control unit from or via the interface unit; and providing the third operation data to the client device via the second network for a visualization of the third operation data at the client device.

According to an embodiment, the method comprises receiving the first operation data via a network tunnel established between the server device and the first industrial control system, in particular between the server device and an edge device provided in the first industrial control system.
The method may further comprise establishing the network tunnel between the server device and the first industrial control device, in particular between the server device and the edge device.

The edge device may be or may comprise an edge gateway.

In a fourth aspect, the disclosure relates to a computer program or to a computer program product comprising computer-readable instructions such that the instructions, when read on a computer, in particular on a computer coupled to a server device with some or all of the features described above, implement on the computer a method with some or all of the features described above.

### Brief Description of the Drawings

The features and numerous advantages of the disclosure will become best apparent from a detailed description of exemplary embodiments with reference to the accompanying drawings, in which:
- Fig. 1: is a schematic illustration of an industrial control environment with external web access according to the state of the art;
- Fig. 2: is a schematic illustration of an industrial control environment in which the techniques according to the present disclosure may be employed;
- Fig. 3: is a schematic illustration of an industrial control environment according to an embodiment;
- Fig. 4: is a schematic illustration of a server device according to an embodiment;
- Fig. 5: is a flow diagram illustrating a method for providing visualization data in an industrial control environment according to an embodiment;
- Fig. 6: is a schematic illustration of an implementation of an industrial control environment according to an embodiment;
- Fig. 7: is a schematic illustration of an industrial control environment employing an interface unit according to an embodiment;
- Fig. 8: is a schematic illustration of an industrial control environment employing a virtual interface unit according to an embodiment; and
- Fig. 9: is a schematic illustration of another industrial control environment employing a virtual interface unit according to an embodiment.

### Detailed Description

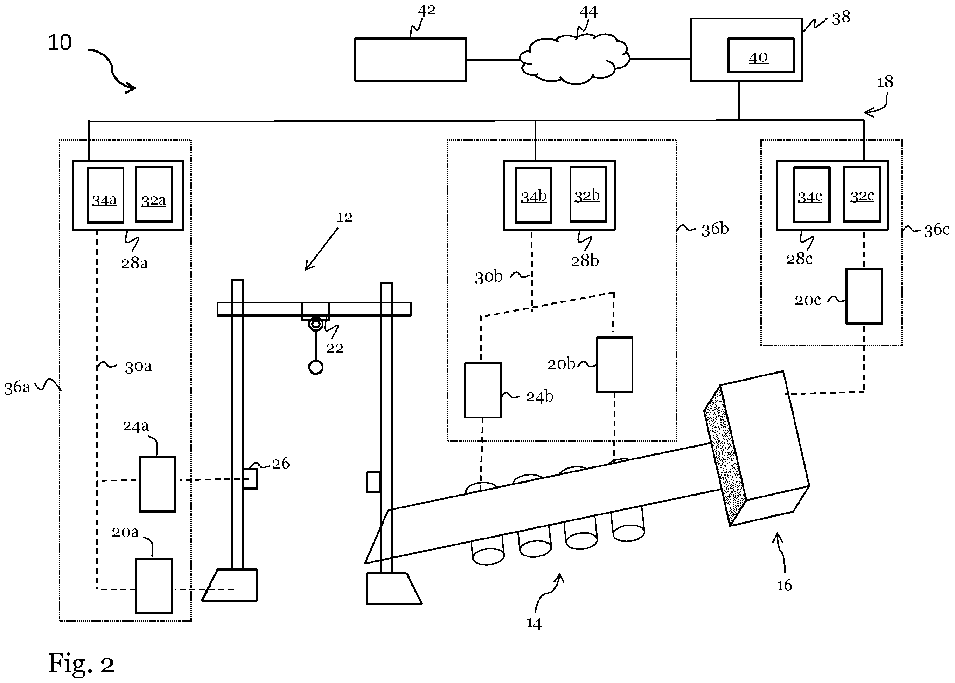

Fig. 2 is a schematic illustration of an industrial control environment 10 in which the techniques according to the present disclosure may be employed. The industrial control environment 10 depicted in Fig. 2 is a factory environment in which goods are transported from a gantry crane 12 via a conveyor belt 14 to a packaging station 16, which are linked by means of a communication network 18. However, this is merely one specific example chosen for ease of illustration, and the techniques according to the present disclosure may be employed in a wide range of industrial control environments, from factory environments and chemical plants to applications in building or lighting automation.

The operation of the gantry crane 12 may be controlled by means of a plurality of actuators or sensors. For instance, a first actuator unit 20a may be connected to the gantry crane 12 and may be adapted to control the movement of a hook assembly 22 of the gantry crane, so to place goods on the conveyor belt 14. A first sensor unit 24a may be connected to an infrared light barrier sensor 26, which may be adapted to sense the presence of humans or other obstacles in the operation path of the hook assembly 22, so to trigger an alarm signal and shut down the operation of the movable hook assembly 22 in case these obstacles may interfere with the safe operation of the gantry crane 12.

The first actuator unit 20a and the first sensor unit 24a may be communicatively connected to a first industrial control unit 28a by means of a first industrial control network 30a, such as a first field bus network. The first industrial control unit 28a may comprise a first memory unit 32a adapted to store instructions of a first industrial control program, such as in the form of a compiled code or ladder logic instructions. The first memory unit 32a may also store program variables pertaining to an operation of the first industrial control program, and/or first sensor values obtained from the first sensor unit 24a via the first industrial control network 30a. The first industrial control unit 28a may further comprise a first processing unit 34a adapted to load and run the first industrial control program, and to exchange data with the first actuator unit 20a and the first sensor unit 24a via the first industrial control network 30a in accordance with a first communication protocol, such as a communication protocol compliant with the industry standard IEC 61784-3.

For instance, the first industrial control unit 28a may provide operation commands for an operation of the movable hook assembly 22 to the gantry crane 12 via the first field bus network 30a and the first actuator unit 20a. In addition, the first industrial control unit 28a may receive first sensor signals from the infrared light barrier sensor 26 via the first sensor unit 24a and the first field bus network 30a, and in response to the received first sensor signals may send a command to the first actuator unit 20a to pause or change the movement of the hook assembly 22. The first industrial control unit 28a may store the received first sensor signals in the first memory unit 32a, possibly alongside other data pertaining to an operation of the first industrial control program.

In the embodiment of Fig. 2, the first actuator unit 20a and the first sensor unit 24a are shown as separate units. However, in some implementations the actuator units and sensor units may be combined into a common unit, and may in fact be integrated into the controlled machinery, such as the gantry crane 12.

The first industrial control unit 28a, the first actuator unit 20a and the first sensor unit 24a as well as the first industrial control network 30a together form part of a first industrial control system 36a, which may comprise all the control components required for an operation of the gantry crane 12.

While Fig. 2 shows a single first actuator unit 20a and a single first sensor unit 24a, in general the first industrial control system 36a may comprise a larger number of actuator units and sensor units for controlling different operations of the gantry crane 12.

An operation of the conveyor belt 14 may be controlled similarly by means of a second control system 36b, which comprises a second industrial control unit 28b as well as a second actuator unit 20b and a second sensor unit 24b that are connected to the second industrial control unit 28b by means of a second industrial control network 30b, such a second field bus network.

The second industrial control unit 28b comprises a second memory unit 32b adapted to store a second industrial control program, such as a compiled industrial control program or ladder logic instructions. The second memory unit 32b may be further adapted to store program variables pertaining to the second industrial control program, and second sensor data pertaining to an operation of the conveyor belt 14. The second industrial control unit 28b further comprises a second processing unit 34b adapted to load and run the second industrial control program, and to exchange data with the second actuator unit 20b and the second sensor unit 24b via the second industrial control network 30b.

In particular, the second actuator unit 20b may be adapted to actuate a driving roller of the conveyor belt 14 in response to driving signals, wherein the second actuator unit 20b receives the driving signals from the second processing unit 34b of the second industrial control unit 28b via the second field bus network 30b according to a second communication protocol, which may or may not correspond to the first communication protocol.

The second sensor unit 24b may be connected to a sensor device (not shown) adapted to measure a speed of movement of the conveyor belt 14, and may provide corresponding second sensor signals to the second industrial control unit 28b via the second field bus network 30b. The second industrial control unit 28b may process the second sensor signals in the second processing unit 34b in a feedback loop to control the operation of the conveyor belt 14 by means of the second actuator unit 20b.

Again, any larger number of actuator units and/or sensor units may be connected to the second industrial control unit 28b via the second field bus network 30b to control various aspects of the operation of the conveyor belt 14.

Similarly, an operation of the packaging station 16 may be controlled by means of a third industrial control system 36c, which comprises a third industrial control unit 28c as well as a third actuator unit 20c that are interconnected by means of a third industrial control network 30c, such as a third fieldbus network.

The third industrial control unit 28c comprises a third memory unit 32c adapted to store a third industrial control program, such as a compiled industrial control program or ladder logic instructions. The third memory unit 32c may be further adapted to store program variables and other data pertaining to the third industrial control program or the packaging station 16. The third industrial control unit 28c further comprises a third processing unit 34c adapted to load and run the third industrial control program, and to exchange data with the third actuator unit 20c via the third industrial control network 30c.

The third actuator unit 20c receives the control signals from the third industrial control unit 28c via the third field bus network 30c in accordance with a third communication protocol, which may or may not correspond to the first communication protocol and the second communication protocol.

As illustrated in Fig. 2, the industrial control environment 10 further comprises a server device 38, which is communicatively coupled to the first industrial control system 36a, the second industrial control system 36b and the third industrial control system 36c by means of the communication network 18, which may likewise be or comprise a field bus network. For instance, the communication network 18 may correspond to each of the first fieldbus network 30a, second fieldbus network 30b and third fieldbus network 30c. In other embodiments, the communication network 18 is a network distinct from each of the first fieldbus network 30a, second fieldbus network 30b and third fieldbus network 30c

In some embodiments, the server device 38 may be adapted to store and provide industrial control program files, industrial program functions and parameters centrally for a plurality of industrial control units, including the industrial control units 28a, 28b, 28c of the industrial control systems 36a, 36b, 36c. The server device 38 may also be employed to provide update or maintenance functionalities for the industrial control units 28a, 28b, 28c. Such a central server device 38 is sometimes known as an automation server.

In the configuration illustrated in Fig. 2, the server device 38 comprises a visualization unit 40 that is adapted to receive operation data from the industrial control systems 36a, 36b, 36c via the communication network 18.

For instance, the visualization unit 40 may be adapted to receive first operation data pertaining to an operation of the first industrial control unit 28a from the first industrial control unit 28a via the communication network 18. The first operation data may comprise data stored in the first memory unit 32a of the first industrial control unit 28a, such as operational parameters pertaining to the first industrial control program for controlling the gantry crane 12. The first operation data may also comprise the first sensor data pertaining to the light barrier sensor 26.

Similarly, the visualization unit 40 may be adapted to receive second operation data pertaining to an operation of the second industrial control unit 28b from the second industrial control unit 28b via the communication network 18. The second operation data may comprise data stored in the second memory unit 32b of the second industrial control unit 28b, such as operational parameters pertaining to the second industrial control program for controlling the operation of the conveyor 14. The second operation data may also comprise the second sensor data pertaining to the sensor unit 24b.

Further, the visualization unit 40 may be adapted to receive third operation data pertaining to an operation of the third industrial control unit 28c from the third industrial control unit 28c via the communication network 18. The third operation data may comprise data stored in the third memory unit 32c of the third industrial control unit 28c, such as operational parameters pertaining to the third industrial control program for controlling the operation of the packaging station 16.

The visualization unit 40 may collect the operational data and may provide it centrally to a client device 42, such as a web application connected to the server device 38 via a public network 44, such as the Internet. In this way, a remote user of the client device 42 may access the server device 38 for obtaining the first, second and third operation data for display on the client device 42, without the need to access the industrial control systems 36a, 36b, 36c individually.

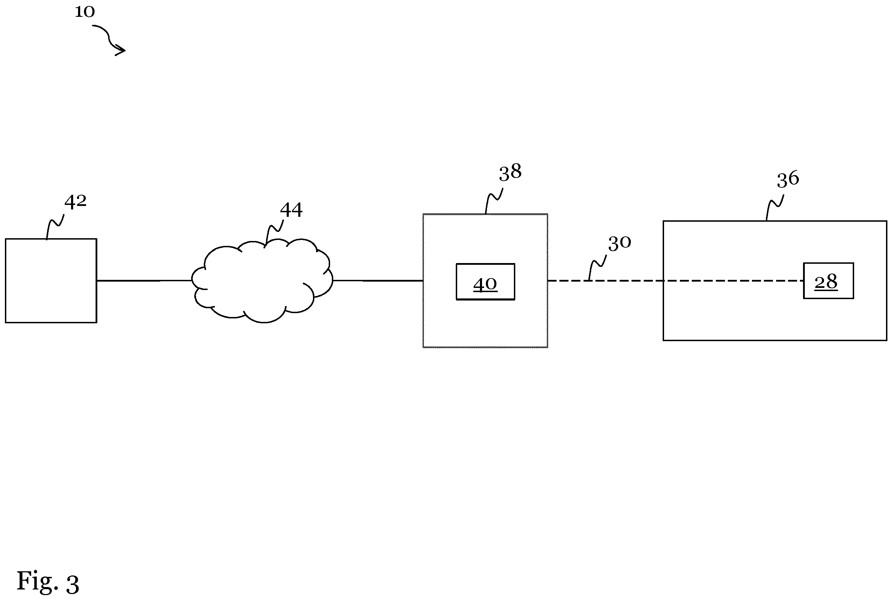

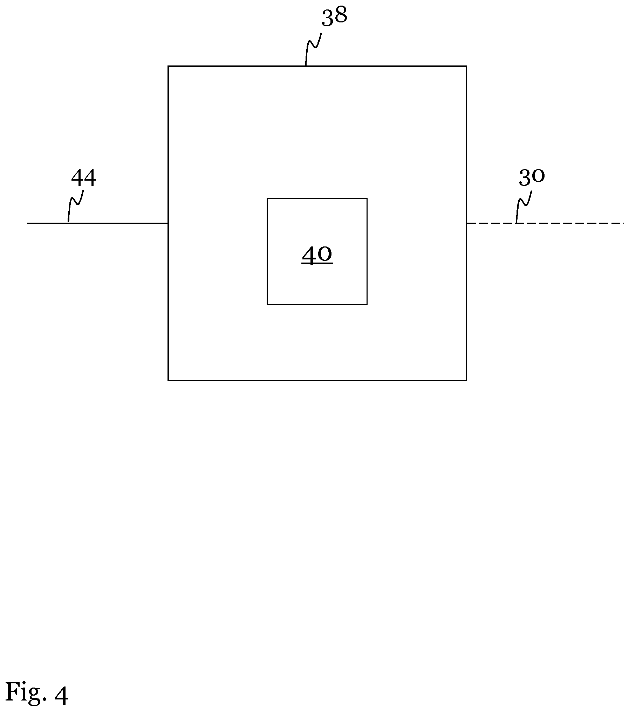

The functionality of the server device 38 according to the present disclosure will now be described in further detail with reference to the embodiments of Figures 3 and 4.

Fig. 3 is a schematic illustration of an industrial control environment 10 comprising a server device 38 that is coupled to a first industrial control system 36 comprising at least a first industrial control unit 28 via a first network 30, such as an industrial control network, wherein the server device 38 is further coupled to a client device 42 via a second network 44, such as the Internet.

Fig. 4 is a schematic illustration of the server device 38, such as the server device as it may be employed in the context of the industrial control environment 10 illustrated in Fig. 2 and/or Fig. 3.

The server device 38 shown in Figures 3 and 4 comprises a visualization unit 40 that is adapted to receive first operation data pertaining to an operation of the first industrial control unit 28 from the first industrial control system 36 via the first network 30, and further adapted to provide the first operation data to the client device 42 via the second network 44 for a visualization of the first operation data at the client device 42.

The first operation data may comprise any kind of data pertaining to an operation of the first industrial control unit 28 or the machinery or equipment associated with the industrial control system 36. As an example, the first operation data may comprise sensor data pertaining to an operation of the machinery or equipment associated with the industrial control system 36.

The client device 42 may be or may comprise any computer device adapted to display a visualization of the first operation data, such as on a screen. For instance, the client device 42 may be a desktop computer, a mobile computer or a mobile communication device, such as an Internet-enabled mobile phone.

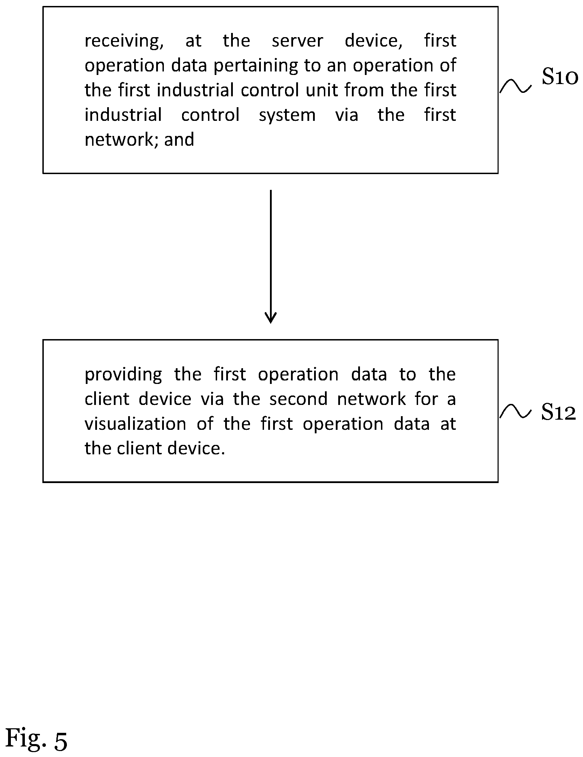

Fig. 5 is a flow diagram illustrating a method for providing visualization data in an industrial control environment, such as the industrial control environment 10 described above with reference to Figures 3 and 4, according to an embodiment. The industrial control environment comprises a server device, such as the server device 38, a client device, such as the client device 42, and a first industrial control system, such as the industrial control system 36, wherein the industrial control system comprises at least a first industrial control unit, such as the industrial control unit 28. The server device is adapted to couple to the first industrial control system via a first network, such as the industrial control network 30, and to couple to the client device via a second network, such as the public network 44.

In a first step S10, the method comprises receiving, at the server device 38, first operation data pertaining to an operation of the first industrial control unit 28 from the first industrial control system 36 via the first network 30.

In a second step S12, the method comprises providing the first operation data to the client device 42 via the second network 44 for a visualization of the first operation data at the client device 42.

The techniques of the present disclosure as described above with reference to Figures 2 to 5 have several advantages over the prior art.

Firstly, only the server device 38 may be exposed to external communication from the client device 42 via the public network 44, whereas the industrial control system 36 may be shielded from communication with the client device 42 and from the public network 44 by means of the server device 38. In particular, in contrast to prior art solutions the industrial control system 38 or industrial control unit 28 may no longer need to provide open IP ports for the web visualization, which eliminates possible attack vectors. The server device 38 may in addition validate or encrypt the data traffic to and from the industrial control system 36 or industrial control unit 28, for enhanced protection against unauthorised access.

In particular, if the client device communicates with the server device 38 via the public network 44, such as the Internet, using http, the server device 38 may serve as the http endpoint for communication with the industrial control system 36, when seen from the client device 42. Communication in between the server device 38 and the industrial control system 36 or industrial control unit 28 may employ a more efficient and/or more secure communication channel than http.

Secondly, the server device 38 may store data pertaining to a visualization of the operational data, such as html or Java Script files or images or templates at a central location within a possibly large industrial control environment having a plurality of industrial control systems 36 and/or industrial control units. This data may then no longer need to be exchanged between the server device 38 and the industrial control system(s) 36. The data exchange between the server device 38 and the industrial control system(s) 36 or industrial control unit(s) 28, respectively may be limited to the raw operational data, such as data in CSV format. The memory and processing requirements of the industrial control units 28 may hence be relaxed. Moreover, the network traffic in the industrial control network 30 and the latency of the user access may be greatly reduced.

In particular, the server device 38 may store template data pertaining to the web visualization, such as templates comprising images, dials or bar charts, and may combine the template data with the operation data received from the industrial control system 36 or industrial control unit 28 to provide upgraded data to the client device 42.

Thirdly, as described above with reference to Fig. 2 the server device 38 may centrally administer the web access to a large number of industrial control systems 36a, 36b, 36c or industrial control units 28a, 28b, 28c. Similarly, the server device 38 may centrally administer the web access from a large number of client devices 42. This may simplify an update of software and hardware relating to the visualization, which may be limited to the server device 38 rather than being required for a large number of industrial control units 28 and client devices 42 separately.

Fourthly, in case the server device 38 is an automation server, it usually comes equipped with techniques for user and access management, which may then also be employed for managing the access of the client device 42 to the operation data for visualization purposes. No additional infrastructure, hardware or software may be required to manage the user access to the server device 38 for web visualization.

Fifthly, in a configuration in which the automation server doubles as the server device 38, the server device 38 will typically be aware of the hardware and software specifications of the industrial control unit 28 and other components of the industrial control system 36, including the specific versions of the industrial control programs running on these components. This knowledge may allow the server device 38 to optimize and/or upgrade the operation data received from the industrial control system 36 in accordance with the hardware and software specifications of the industrial control unit 28 for improved or tailored display at the client device 42.

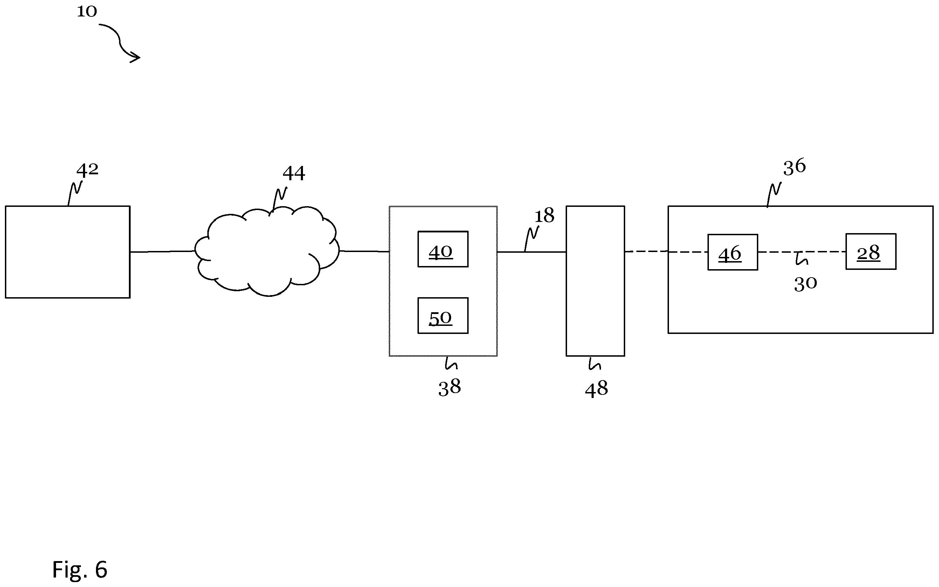

Fig. 6 schematically illustrates an example implementation of an industrial control environment 10, such as the industrial control environment 10 described above with reference to Fig. 3. Corresponding components share the same reference numerals, for ease of presentation.

In the configuration of Fig. 6, the server device 38 is an automation server that can be accessed from the client device 42, such as from a web application running on a desktop computer, mobile computer or Internet-enabled mobile telephone, via the Internet 44 by means of Secure WebSocket. For the client device 42, the automation server 38 represents the http endpoint of the communication. Communication between the automation server 38 and the industrial control system 36 may be via a secure and authenticated communication channel over the communication network 18.

For instance, the industrial control system 36 may comprise an edge gateway 46 which is communicatively coupled to the industrial control unit 28 via the industrial control network 30, such as the field bus network, and which is adapted to establish a secure and authenticated communication channel to the automation server 38 over the network 18, such as when the industrial control unit 28 is started up or initialized. As a result, the industrial control system 36 may feature only outgoing connections, and ports of the industrial control system 36 or industrial control unit 28 may not need to be publicly exposed.

A network tunnel may be established between the automation server 38 and the industrial control system 36, in particular between the automation server 38 and the edge gateway 46. The network tunnel may provide a secure and authenticated communication channel for the operation data, and potentially other data between the automation server 38 and the industrial control system 36.

In some embodiments, communication of the operation data between the industrial control unit 28 and the edge gateway 46 may employ the ARTI3 Protocol. The edge gateway 46 may then tunnel the operation data to the automation server 38, for instance employing a Web Secure Socket (WSS) protocol.

In addition, a firewall 48 may be provided to additionally protect the industrial control system 36 or industrial control unit 28 from unauthorised access.

In some embodiments, the visualization unit 40 may request updates of operational data from the industrial control system 36 or industrial control unit 28 through the secure and authenticated communication channel at regular time intervals.

In other embodiments, the visualization unit 40 is adapted to receive indication data from the industrial control system 36, such as from the industrial control unit 28. The visualization unit 40 may be adapted to determine from the indication data whether an operational state of the industrial control system 36, in particular the industrial control unit 28, has changed, for instance over a predetermined time period or since a preceding update. The visualization unit 40 may be adapted to request and receive the operation data from the industrial control system 36 only in case the visualization unit 40 has determined a change in the operational state. These techniques may serve to further reduce the communication overhead between the server device 38 and the industrial control system 36.

Optionally, the server device 38 may further comprise a memory unit 50 that is communicatively coupled to the visualization unit 40. The memory unit 50 may be adapted to store template data pertaining to the visualization. The visualization unit 40 may be adapted to receive the template data from the memory unit 50, and to combine the template data with the operation data pertaining to the operation of the industrial control unit 28. For instance, the template data may comprise image data, dials or bar charts that may be useful for visualizing the operation data. The visualization unit 40 may be adapted to provide the combined data, comprising both the template data and the operation data, to the client device 42 via the public network 44, for enhanced visualization at the client device 42.

One or more users may access the industrial control system 36 via the automation server 38 at the same time. In particular, the automation server 38 may be simultaneously linked to a plurality of edge gateways 46, wherein each edge gateway 46 may be coupled to a plurality of industrial control units 28. Several edge gateways 46 may be employed to establish redundant communication paths to a given industrial control unit 28.

In general, the edge gateway 46 may be realized in hardware or in software/firmware. The edge gateway 46 may also be realized partly in hardware and partly in software/firmware.

Fig. 6 shows the edge gateway 46 as a stand-alone component. However, this is for ease of presentation only, and in other embodiments the edge gateway 46 may be integrated into the industrial control unit 28 or the firewall 48.

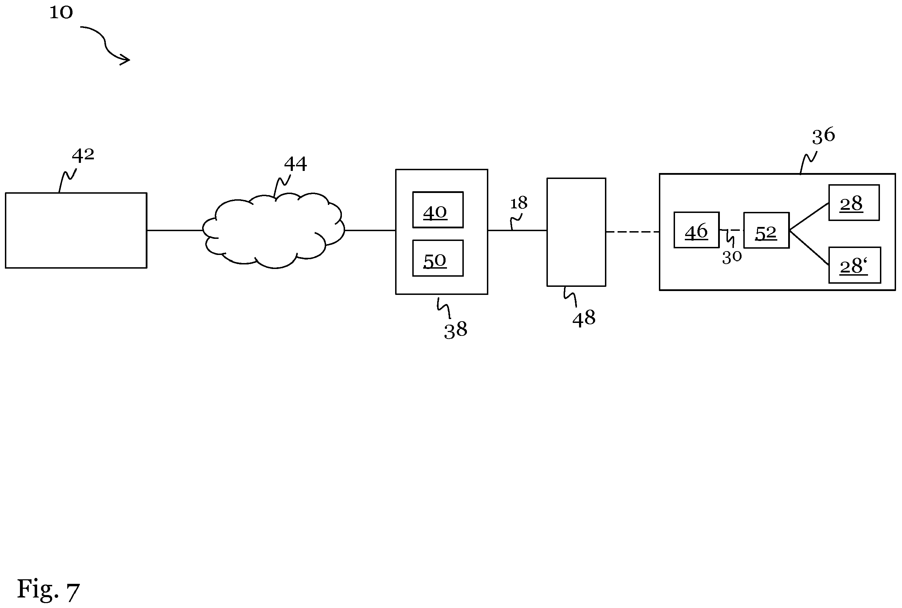

As described above, the techniques of the present disclosure are not limited to industrial control systems 36 that comprise a single industrial control unit. In general, the industrial control system 36 may comprise any number of industrial control units, such as a plurality of industrial control units for controlling different components of a larger machinery. A corresponding configuration is schematically illustrated in Fig. 7. The industrial control environment 10 of Fig. 7 generally corresponds to the industrial control environment described above with reference to Fig. 6, and corresponding components share the same reference numerals.

However, in contrast to the configuration of Fig. 6, the industrial control system 36 of Fig. 7 comprises a first industrial control unit 28 and a second industrial control unit 28'. Both the first industrial control unit 28 and the second industrial control unit 28' may generally correspond in design and functionality to the industrial control units 28a, 28b, 28c.

The industrial control system 36 further comprises an interface unit 52 that is communicatively coupled to the first industrial control unit 28 and the second industrial control unit 28', and is adapted to aggregate first operation data pertaining to the first industrial control unit 28 and second operation data pertaining to the second industrial control unit 28'. The interface unit 52 may, in some embodiments, comprise a display device adapted to visualize the first operation data and the second operation data locally. However, employing the techniques of the present disclosure, the interface unit 52 may also be accessed remotely from the client device 42 via the automation server 38. In particular, the automation server 38 may be adapted to receive the first operation data and the second operation data from the interface unit 52 via the edge gateway 46.

In some embodiments, the interface unit 52 maybe implemented in hardware. In other embodiments, the interface unit 52 may be implemented in software or firmware. In still further embodiments, the interface unit 52 may be implemented partly in hardware and partly in software/firmware.

Fig. 7 shows the interface unit 52 as a separate or stand-alone unit in the industrial control system 36. However, this is for ease of presentation only, and in other embodiments the interface unit 52 may be implemented in the edge gateway 46, or in one of the industrial control units 28, 28'.

As further explained above with reference to Fig. 2, the techniques of the present disclosure are not limited to industrial control environments with a single industrial control system 36, but may be applied to industrial control environments with any number of industrial control systems 36a, 36b, 36c, wherein the various industrial control systems 36a, 36b, 36c maybe associated with different machinery, and may each comprise any number of industrial control units. It is a particular advantage of the techniques of the present disclosure that a single server device, such as the automation server 38, may be employed to centrally administer and update a plurality of different industrial control systems 36a, 36b, 36c and industrial control units 28a, 28b, 28c.

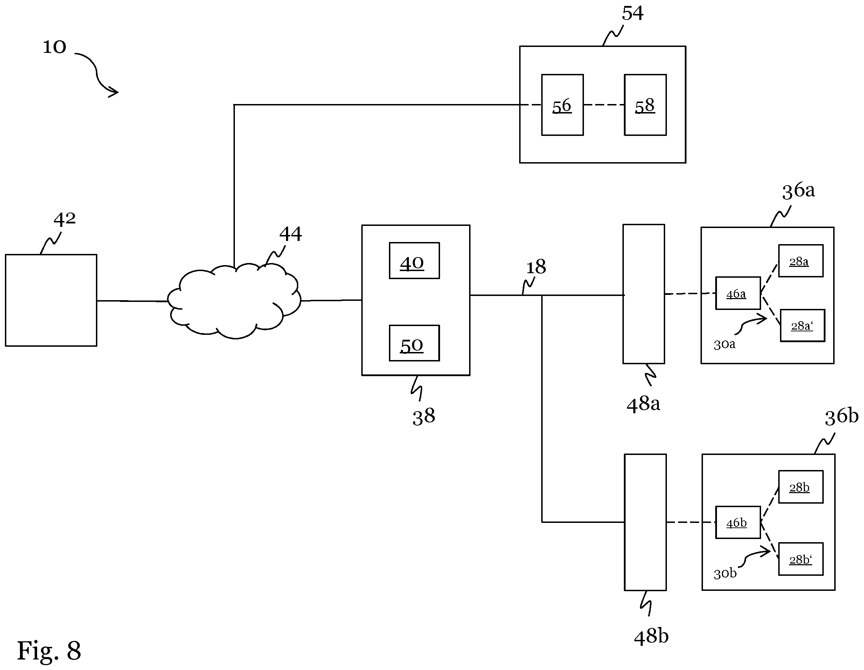

A corresponding implementation of an industrial control environment 10 is schematically illustrated in Fig. 8. The setup is generally similar to the implementations described above with reference to Figures 2 to 7, and corresponding components share the same reference numerals.

The industrial control environment 10 of Fig. 8 comprises a first industrial control system 36a and a second industrial control system 36b that are communicatively coupled to the server device 38 via the communication network 18, and are protected by a first firewall 48a and a second firewall 48b, respectively.

The first industrial control systems 36a comprises a first edge gateway 46a that is communicatively coupled to a first pair of industrial control units 28a, 28a' via a first industrial control network 30a, such as a first field bus network.

Similarly, the second industrial control system 36b comprises a second edge gateway 46b that is communicatively coupled to a second pair of industrial control units 28b, 28b' via a second industrial control network 30b, such as a second field bus network that may or may not correspond to the first field bus network.

Again, an interface unit may be employed to aggregate operational data from the industrial control units 28a, 28a', 28b, 28b'. However, contrary to the configuration described above with reference to Fig. 7, the interface unit may be implemented in a virtual interface environment 54 that maybe located remotely from the industrial control units 28a, 28a', 28b, 28b', such as in a cloud that is linked to the server device 38 via the public network 44, in particular via the Internet.

As further illustrated in Fig. 8, the virtual interface environment 54 comprises a virtual edge gateway 56 and a virtual interface unit 58 that may both be implemented as a virtual machine or container in the virtual interface environment 52, and may be managed and administered by the server device 38 via the public network 44. The client device 42 may access the virtual interface unit 58 via the visualization unit 40 of the server device 38.

Advantageously, the virtual interface unit 58 may aggregate operational data from a large plurality of industrial control systems and industrial control units that may be located remotely. Moreover, the architecture of Fig. 8 permits a central maintenance and update of the virtual interface unit 58, which is an advantage over the maintenance of a plurality of interface units at different locations.

The virtual interface environment 54 and/or the virtual interface unit 58 may be understood, in some embodiments, as forming part of or forming an extension to the first industrial control system 36a and/or the second industrial control system 36b.

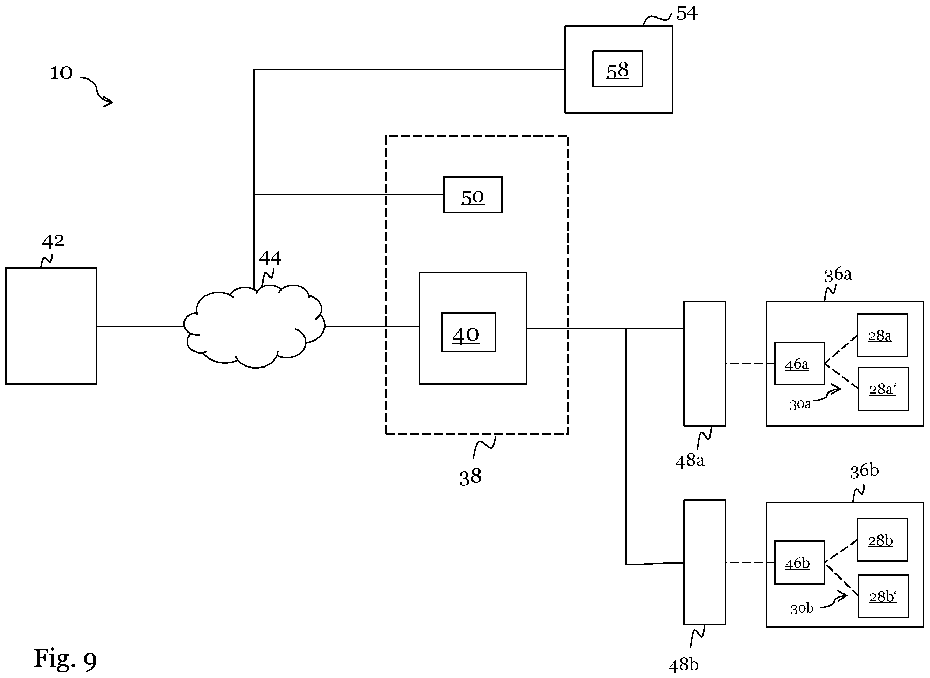

Fig. 8 shows a configuration in which the virtual interface unit 58 is accessed via the virtual edge gateway 56. However, in other embodiments the software of the virtual interface unit 58 may be adapted so that the virtual interface unit 58 may communicate with the server device 38 directly and without an additional virtual edge gateway 56. Such a configuration is shown schematically in Fig. 9, which is otherwise similar to the configuration described above with reference to Fig. 8, and corresponding components share the same reference numerals.

In the embodiments described above with reference to Figures 6 to 8, the memory unit 50 and the visualization unit 40 of the server device 38 were shown integrated into a common housing. However, the disclosure is not so limited, and in other configurations the memory unit 50 may also be located remotely from the visualization unit 40. For instance, Fig. 9 shows a configuration in which the memory unit 50 of the server device 38 is located remotely from the visualization unit 40, and is communicatively connected to the visualization unit 40 via a network, such as the Internet 44.

The description of the embodiments and the figures merely serves to illustrate the techniques of the disclosure and the numerous advantages associated therewith, but should not be understood to imply any limitation. The scope of the disclosure is to be determined from the appended claims.

### C32314EP

### CODESYS Holding GmbH

### Visualization of Industrial Control Operation Data via a Central Server

### Reference Signs

- 10: industrial control environment
- 12: gantry crane
- 14: conveyor belt
- 16: packaging station
- 18: communication network
- 20a, 20b, 20c: actuator units
- 22: hook assembly of gantry crane 12
- 24a, 24b: sensor units
- 26: light barrier sensor
- 28; 28a, 28b, 28c: industrial control units
- 28'; 28a', 28b': industrial control units
- 30; 30a, 30b, 30c: industrial control networks/ field bus networks
- 32a, 32b, 32c: memory units of industrial control units 28a, 28b, 28c
- 34a, 34b, 34c: processing units of industrial control units 28a, 28b, 28c
- 36; 36a, 36b, 36c: industrial control systems
- 38: server device/ automation server
- 40: visualization unit of server device 38
- 42: client device
- 44: public network, Internet
- 46; 46a, 46b: edge gateway
- 48; 48a, 48b: firewall
- 50: memory unit of server device 38
- 52: interface unit
- 54: virtual interface environment
- 56: virtual edge gateway
- 58: virtual interface unit
- 100: industrial control environment (state of art)
- 102: industrial control network (state of art)
- 104: industrial control unit (state of art)
- 106: web application (state of art)
- 108: public network (state of art)
- 110: firewall (state of art)

## Claims

1. A server device (38) for an industrial control environment (10),
the server device (38) being adapted to couple to a first industrial control system (36; 36a, 36b, 36c) comprising at least a first industrial control unit (28; 28a, 28b, 28c; 28'; 28a', 28b') via a first network (18; 30; 30a, 30b, 30c), and to couple to a client device (42) via a second network (44);
the server device (38) comprising:
a visualization unit (40) adapted to receive first operation data pertaining to an operation of the first industrial control unit (28; 28a, 28b, 28c; 28'; 28a', 28b') from the first industrial control system (36; 36a, 36b, 36c) via the first network (18; 30; 30a, 30b, 30c), and further adapted to provide the first operation data to the client device (42) via the second network (44) for a visualization of the first operation data at the client device (42).

2. The server device (38) according to claim 1, wherein the server device (38) is adapted to establish a communication channel with the first industrial control system (36; 36a, 36b, 36c) via the first network (18; 30; 30a, 30b, 30c) upon receipt of a communication request from the first industrial control system (36; 36a, 36b, 36c), in particular from the first industrial control unit (28; 28a, 28b, 28c; 28'; 28a', 28b').

3. The server device (38) according to any of the preceding claims, wherein the server device (38) comprises a memory unit (50) coupled to the visualization unit (40), wherein the memory unit (50) is adapted to store template data pertaining to the visualization, and wherein the visualization unit (40) is adapted to receive the template data from the memory unit (50) and to combine the template data with the first operation data pertaining to the operation of the first industrial control unit (28; 28a, 28b, 28c; 28'; 28a', 28b'), and wherein the visualization unit (40) is adapted to provide the combined data to the client device (42) via the second network (44) for the visualization of the first operation data at the client device (42).

4. The server device (38) according to any of the preceding claims, wherein the visualization unit (40) is adapted to receive first indication data from the first industrial control system (36; 36a, 36b, 36c), in particular the first industrial control unit (28; 28a, 28b, 28c; 28'; 28a', 28b'), and wherein the visualization unit (40) is adapted to determine from the first indication data whether an operational state of the first industrial control system (36; 36a, 36b, 36c), in particular the first industrial control unit (28; 28a, 28b, 28c; 28'; 28a', 28b'), has changed, wherein the visualization unit (40) is adapted to receive the first operation data from the first industrial control system (36; 36a, 36b, 36c), in particular the first industrial control unit (28; 28a, 28b, 28c; 28'; 28a', 28b'), in case the visualization unit (40) has determined a change in the operational state of the first industrial control system (36; 36a, 36b, 36c), in particular the first industrial control unit (28; 28a, 28b, 28c; 28'; 28a', 28b').

5. The server device (38) according to any of the preceding claims, wherein the first industrial control system (36; 36a, 36b, 36c) further comprises a second industrial control unit (28; 28a, 28b, 28c; 28'; 28a', 28b'); wherein the visualization unit (40) is adapted to receive second operation data pertaining to an operation of the second industrial control unit (28; 28a, 28b, 28c; 28'; 28a', 28b') from the first industrial control system (36; 36a, 36b, 36c) via the first network (18; 30; 30a, 30b, 30c), and further adapted to provide the second operation data to the client device (42) via the second network (44) for a visualization of the second operation data at the client device (42).

6. The server device (38) according to any of the preceding claims, wherein the server device (38) is adapted to receive the first operation data via a network tunnel established between the server device (38) and the first industrial control system (36; 36a, 36b, 36c), in particular between the server device (38) and an edge device (46; 46a, 46b) provided in the first industrial control system (36; 36a, 36b, 36c).

7. An industrial control environment (10) comprising a server device (38) according to any of the preceding claims, and at least the first industrial control system (36; 36a, 36b, 36c).

8. A method for providing visualization data in an industrial control environment (10), the industrial control environment (10) comprising a server device (38), a client device (42) and a first industrial control system (36; 36a, 36b, 36c) with at least a first industrial control unit (28; 28a, 28b, 28c; 28'; 28a', 28b'), wherein the server device (38) is adapted to couple to the first industrial control system (36; 36a, 36b, 36c) via a first network (18; 30; 30a, 30b, 30c) and to couple to the client device (42) via a second network (44);
the method comprising:
receiving, at the server device (38), first operation data pertaining to an operation of the first industrial control unit (28; 28a, 28b, 28c; 28'; 28a', 28b') from the first industrial control system (36; 36a, 36b, 36c) via the first network (18; 30; 30a, 30b, 30c); and
providing the first operation data to the client device (42) via the second network (44) for a visualization of the first operation data at the client device (42).

9. The method according to claim 8, further comprising:
receiving, at the server device (38), a communication request from the first industrial control system (36; 36a, 36b, 36c), in particular from the first industrial control unit (28; 28a, 28b, 28c; 28'; 28a', 28b'); and
establishing a communication channel with the first industrial control system (36; 36a, 36b, 36c), in particular with the first industrial control unit (28; 28a, 28b, 28c; 28'; 28a', 28b'), via the first network (18; 30; 30a, 30b, 30c) in response to the communication request.

10. The method according to claim 8 or 9, further comprising:
storing, at the server device (38), template data pertaining to the visualization;
combining, at the server device (38), the template data with the first operation data pertaining to the operation of the first industrial control unit (28; 28a, 28b, 28c; 28'; 28a', 28b'); and
providing the combined data to the client device (42) via the second network (44) for the visualization of the first operation data at the client device (42).

11. The method according to any of the claims 8 to 10, further comprising:
receiving first indication data from the first industrial control system (36; 36a, 36b, 36c), in particular the first industrial control unit (28; 28a, 28b, 28c; 28'; 28a', 28b');
determining from the first indication data whether a change has occurred in an operational state of the first industrial control system (36; 36a, 36b, 36c), in particular the first industrial control unit (28; 28a, 28b, 28c; 28'; 28a', 28b'); and
receiving the first operation data from the first industrial control system (36; 36a, 36b, 36c), in particular the first industrial control unit (28; 28a, 28b, 28c; 28'; 28a', 28b'), in case of the change in the operational state of the first industrial control system (36; 36a, 36b, 36c), in particular the first industrial control unit (28; 28a, 28b, 28c; 28'; 28a', 28b').

12. The method according to any of the claims 8 to 11, wherein the first industrial control system (36; 36a, 36b, 36c) further comprises a second industrial control unit (28; 28a, 28b, 28c; 28'; 28a', 28b');
the method further comprising:
receiving, at the server device (38), second operation data pertaining to an operation of the second industrial control unit (28; 28a, 28b, 28c; 28'; 28a', 28b') from the first industrial control system (36; 36a, 36b, 36c) via the first network (18; 30; 30a, 30b, 30c); and
providing the second operation data to the client device (42) via the second network (44) for a visualization of the second operation data at the client device (42).

13. The method according to any of the claims 8 to 12, wherein the server device (38) is adapted to further couple to a second industrial control system (36; 36a, 36b, 36c) via a third network (18; 30; 30a, 30b, 30c), the second industrial control system (36; 36a, 36b, 36c) comprising at least a third industrial control unit (28; 28a, 28b, 28c; 28'; 28a', 28b');
the method comprising:
receiving, at the server device (38), third operation data pertaining to an operation of the third industrial control unit (28; 28a, 28b, 28c; 28'; 28a', 28b') from the second industrial control system (36; 36a, 36b, 36c) via the third network (18; 30; 30a, 30b, 30c); and
providing the third operation data to the client device (42) via the second network (44) for a visualization of the third operation data at the client device (42).

14. The method according to any of the claims 8 to 13, wherein the server device (38) is adapted to further couple to a second industrial control system (36; 36a, 36b, 36c) via a third network (18; 30; 30a, 30b, 30c), the second industrial control system (36; 36a, 36b, 36c) comprising at least a third industrial control unit (28; 28a, 28b, 28c; 28'; 28a', 28b'), wherein the first industrial control system (36; 36a, 36b, 36c) and the second industrial control system (36; 36a, 36b, 36c) are associated with a common interface unit (52; 58),
the method further comprising:
receiving, at the server device (38), the first operation data and third operation data pertaining to an operation of the third industrial control unit (28; 28a, 28b, 28c; 28'; 28a', 28b') from or via the interface unit (52; 58); and
providing the third operation data to the client device (42) via the second network (44) for a visualization of the third operation data at the client device (42).

15. A computer program comprising computer-readable instructions such that the instructions, when read on a computer, in particular on a computer coupled to a server device (38) according to any of the claims 1 to 7, implement on the computer a method according to any of the claims 8 to 14.
